# EUROPÄISCHE PATENTSCHRIFT

(11) **EP 0 540 985 B1**
(45) Veröffentlichungstag und Bekanntmachung des Hinweises auf die Patenterteilung: **03.01.1996**
(21) Anmeldenummer: 92118337.2
(22) Anmeldetag: 27.10.1992
(51) Int. Cl.: C08G 18/70, C08G 18/73, C08G 18/79, C08G 18/28, C09D 175/00

(54) **Wasserdispergierbare Polyisocyanatgemische**
Water-dispersible polyisocyanate mixtures
Mélanges de polyisocyanates dispersibles dans l'eau

(30) Priorität: 07.11.1991 DE 4136618
(43) Veröffentlichungstag der Anmeldung: 12.05.1993
(73) Patentinhaber: BAYER AG, D-51368 Leverkusen (DE)
(72) Erfinder: Laas, Hans Josef, Dr., W-5000 Köln 60 (DE); Hassel, Tillmann, Dr., W-5000 Köln 80 (DE); Kubitza, Werner, W-5090 Leverkusen 3 (DE); Halpaap, Reinhard, Dr., W-5068 Odenthal-Glöbusch (DE); Noll, Klaus, Dr., W-5000 Köln 80 (DE)

(56) Entgegenhaltungen:
- EP-A- 0 206 059
- FR-A- 2 303 661
- US-A- 3 996 154

## Beschreibung

Die Erfindung betrifft nichtionisch-hydrophil modifizierte, wasserdispergierbare Polyisocyanatgemische mit (cyclo)aliphatisch gebundenen Isocyanatgruppen, ein Verfahren zu ihrer Herstellung und ihre Verwendung als Ausgangskomponente bei der Herstellung von Polyurethankunststoffen, insbesondere als Vernetzer für wasserlosliche oder -dispergierbare Lackbindemittel oder -bindemittelkomponenten mit gegenüber Isocyanatgruppen reaktionsfähigen Gruppen.

In den letzten Jahren stieg die Bedeutung wäßriger Lacke und Beschichtungsmittel aufgrund immer strengerer Emmissionsrichtlinien bezüglich der bei der Lackapplikation freiwerdenden Losemittel stark an. Obwohl inzwischen bereits für viele Anwendungsbereiche wäßrige Lacksysteme zur Verfügung stehen, können diese das hohe Qualitätsniveau konventioneller, lösemittelhaltiger Lacke hinsichtlich Lösemittel- und Chemikalienbeständigkeit oder gegenüber mechanischer Belastbarkeit oftmals nur durch eine chemische Nachvernetzung während der Filmbildung erreichen.

Versuche, eine Nachvernetzung wäßriger Lacke mit Hilfe freie Isocyanatgruppen tragender Verbindungen zu erreichen, d.h. das auf dem Gebiet lösemittelhaltiger Beschichtungen bewährte Konzept der Polyurethanreaktivlacke auf wäßrige Systeme zu übertragen, wurden bislang nur wenige unternommen.

Die DE-OS 2 708 442 beschreibt den Zusatz monomerer organischer Diisocyanate zur Verbesserung des Eigenschaftsbildes wäßriger Polyurethandispersionen. Nach der DE-OS 3 529 249 lassen sich organische Polyisocyanate zur Erhöhung der Lösemittel- und Chemikalienbeständigkeit sowie zur Verbesserung der Verschleißeigenschaften von Beschichtungen auf Basis von in Wasser dispergierten Homo- und Copolymerisaten einsetzen. Die beschriebenen positiven Effekte auf die Lackeigenschaften lassen sich auf eine durch Reaktion der Isocyanate mit Wasser gebildete "Harnstoffhülle" um die dispergierten Polymerteilchen zurückführen. Die als Zusatzmittel eingesetzten Polyisocyanate wirken somit nicht als Vernetzungsmittel für in Wasser dispergierte Kunststoffe oder Kunststoffvorläufer mit gegenüber Isocyanat reaktionsfähigen Gruppen. .

Die Herstellung eines wäßrigen Polyurethanreaktivsystems aus ausgewählten, Emulgatorwirkung aufweisenden, wäßrigen Polyhydroxylverbindungen und niedrigviskosen freien Polyisocyanaten ist Gegenstand der DE-OS 3 829 587. Dabei werden Lackfilme erhalten, deren Eigenschaftsbild dem typischer, lösemittelhaltiger Zweikomponentenlacke entspricht

Aufgrund der allgemein schlechten Emulgierbarkeit organischer Polyisocyanate in Wasser ist das Verfahren der DE-OS 3 829 587 jedoch auf ganz spezielle, emulgierend wirkende Polyoldispersionen beschränkt.

Die Übertragung auf beliebige wäßrige, gegenüber Isocyanaten reaktive Gruppen tragende Bindemittel erfordert den Einsatz hydrophil modifizierter, selbstemulgierbarer Polyisocyanatkomponenten.

Die GB-PS'sen 1 417 618 und 1 417 276 beschreiben Reaktionsprodukte organischer, insbesondere aromatischer Polyisocyanate mit mindestens 5, in den Ausführungsbeispielen jedoch stets mehr als 10 Ethylenoxideinheiten aufweisenden Polyethylenglycolmonoalkylethern bzw. mit Diestern aus Malonsäure und solchen Polyethern als oberflächenaktive Substanzen, die nach der GB-PS 1 444 933 und der DE-OS 2 908 844 die Herstellung stabiler wäßriger Emulsionen aromatischer Polyisocyanate ermöglichen.

Wäßrige Isocyanatemulsionen unter Verwendung von Emulgatoren, wie sie durch Umsetzung von Di- bzw. Polyisocyanaten mit speziellen monofunktionellen, mindestens 10 Ethylenoxideinheiten aufweisenden Polyethylenoxidpolyethern erhalten werden, sind Gegenstand der DE-OS 2 921 681.

Mit Hilfe von Alkylenoxidpolyethern hydrophil modifizierte aromatische Polyisocyanate sind z.B. auch aus EP-A-61 628 und EP-A-95 594 bekannt.

In Form wäßriger Emulsionen finden solche Produkte vorzugsweise als Klebstoffe oder Bindemittel, beispielsweise zur Verleimung von Spanplatten, zur Herstellung von Formkörpern oder zur Verklebung von Polyurethanschäumen Verwendung (DE-OS'en 2 447 135, 2 610 552, 2 921 726, GB 1 502 777, GB 2 075 038, EP-A-0 310 345).

Aromatische Polyisocyanate sind jedoch aufgrund ihrer hohen Reaktivität gegenüber Wasser und der damit verbundenen Kohlendioxidentwicklung sowie der bekanntermaßen geringen Vergilbungsbeständigkeit daraus erhaltener Beschichtungen als Vernetzerkomponente für wäßrige Lacksysteme nur bedingt geeignet.

Isocyanatfunktionelle Vernetzer für hochwertige, lichtechte, wäßrige Beschichtungssysteme sind ausschließlich auf Basis der weniger reaktiven (cyclo)aliphatischen Polyisocyanate herstellbar.

Wasserdispergierbare Zubereitungen solcher (cyclo)aliphatischen Polyisocyanate sind Gegenstand der EP-A206 059 und enthalten als Emulgatoren Umsetzungsprodukte aus Polyisocyanat und ein- oder mehrwertigen Polyalkylenoxidalkoholen, bestehend aus mindestens einer, mindestens 10 Ethylenoxideinheiten aufweisenden Polyetherkette. Konkret beschrieben (Ausführungsbeispiele) sind allerdings nur Polyetheralkohole mit mehr als 15 Ethylenoxideinheiten pro Molekül. Die wasserdispergierbaren Zubereitungen der Vorveröffentlichung werden als Zusatzmittel für wäßrige Klebstoffe verwendet.

Als Vernetzer für in Wasser gelöst oder dispergiert vorliegende Bindemittel oder Bindemittelkomponenten mit gegenüber Isocyanatgruppen reaktionsfähigen Gruppen, insbesondere alkoholischen Hydroxylgruppen, sind die in der Vorveröffentlichung beschriebenen Polyisocyanatzubereitungen jedoch nur schlecht geeignet.

Grundvoraussetzung für gute lacktechnische Eigenschaften ist nämlich bei zweikomponentigen Lackformulierungen eine möglichst homogene Verteilung der Vernetzerkomponente im Lackbindemittel. Dies erfordert in wäßrigen Polyurethan-Reaktivsystemen den Einsatz hochhydrophi-lierter, besonders feinteilig emulgierbarer Polyisocyanate. Die wasserdispergierbaren Polyisocyanatzubereitungen, wie sie in der EP-A 206 059 beschrieben sind, neigen jedoch bei höheren Emulgatorgehalten, wie sie zum Erreichen einer guten Emulgierbarkeit für Lackanwendungen erforderlich sind, bei Raumtemperaturlagerung häufig zum Kristallisieren.

Die Emulgierung hydrophilierter Polyisocyanate in Wasser ist im allgemeinen mit starken Viskositätsänderungen verbunden. Mit steigender Wasseraufnahme steigt die Viskosität der primär entstehenden Wasser-in-Öl-Emulsion immer mehr an, bis schließlich unter Phasenumkehr und Viskositätsabfall eine Öl-in-Wasser-Emulsion entsteht. Insbesondere bei der Emulgierung von Polyisocyanatzubereitungen der EP-A-206 059 mit einem hohen Emulgatorgehalt ist das zu überwindende Viskositätsmaximum so hoch, daß sie sich oftmals nur unter Anwendung hoher Scherkräfte (z.B. Hochgeschwindigkeitsrührer) oder nach Zusatz erheblicher Mengen organischer Cosolventien genügend feinteilig in Wasser einrühren lassen. Während organische Cosolventien in wäßrigen Beschichtungssystemen aus ökologischen Gründen möglichst nicht enthalten sein sollten, führt der Einsatz von Hochgeschwindigkeitsrührern aber meistens zu einer störenden Schaumbildung auf dem Lackansatz.

Die der vorliegenden Erfindung zugrundeliegende Aufgabe bestand nun darin, hydrophil modifizierte Polyisocyanatgemische mit (cyclo)aliphatisch gebundenen Isocyanatgruppen, insbesondere solche auf Basis der als Lackpolyisocyanate bekannten Derivate von 1,6-Diisocyanatohexan (HDI) oder 1-Isocyanato-3,3,5-trimethyl-5-isocyanatomethylcyclohexan (IPDI) mit Uretdion- und/oder Isocyanurat-, Urethan- und/oder Allophanat-, Biuret- oder Oxadiazinstruktur zur Verfügung zu stellen, die sich als Ausgangskomponenten zur Herstellung von Polyurethankunststoffen und vor allem als Vernetzer für wäßrige Bindemittel oder Bindemittelkomponenten in wäßrigen Beschichtungssystemen eignen und dabei nicht mit den oben geschilderten Nachteilen der wasserdispergierbaren Polyisocyanate des Standes der Technik behaftet sind.

Diese Aufgabe konnte mit der Bereitstellung der nachstehend näher beschriebenen erfindungsgemäßen Polyisocyanatgemische bzw. des Verfahrens zu ihrer Herstellung gelöst werden. Die nachstehend näher beschriebenen erfindungsgemäßen Polyisocyanatgemische basieren auf der überraschenden Beobachtung, daß sich (cyclo)aliphatische, durch Umsetzung mit monofunktionellen, im statistischen Mittel weniger als 10 Ethylenoxideinheiten aufweisenden Polyetheralkoholen hydrophil modifizierte Polyisocyanate sehr leicht in Wasser emulgieren lassen, ohne daß dabei störende Viskositätseffekte auftreten.

Das erfindungsgemäße Verfahren gestattet die Herstellung selbst hochhydrophilierter, besonders feinteilig zu emulgierender Polyisocyanatgemische, die im Gegensatz zu den wasserdispergierbaren Polyisocyanatzubereitungen des Standes der Technik bei gleichem Gesamtgehalt an Ethylenoxideinheiten keinerlei Kristallisationstendenz zeigen.

Obwohl in einigen der obengenannten Veröffentlichungen, beispielsweise der GB 1 444 933 und den DE-OS'en 2 447 135, 2 908 844 oder 2 921 726, Polyethylenoxidpolyether mit einer Mindestkettenlänge von 5 Ethylenoxideinheiten als zur Herstellung von Emulgatoren geeignet genannt sind und innerhalb langer Listen geeigneter Polyisocyanate monomere (cyclo)aliphatische Diisocyanate wie HDI und IPDI erwähnt werden und sich daneben in der DE-OS 2 921 726 auch der pauschale Hinweis auf modifizierte Polyisocyanate, beispielsweise solche mit Isocyanurat- oder Biuretgruppen, findet, konnte der Fachmann keiner der obengenannten Veröffentlichungen irgendeinen konkreten Hinweis darauf entnehmen, daß sich (cyclo)aliphatische Polyisocyanate, insbesondere Lackpolyisocyanate der oben genannten Art, nach Umsetzung mit weniger als 10 Ethylenoxideinheiten aufweisenden Polyetheralkoholen besonders leicht zu stabilen, feinteiligen Emulsionen in Wasser einrühren lassen, ohne daß dabei ein merkliches Viskositätsmaximum überwunden werden muß. Dies war überraschend, da aufgrund der Lehre der EP-A 206 059 zu erwarten war, daß sich wäßrige Emulsionen solcher Polyisocyanate nur unter Verwendung von mindestens 10 Ethylenoxideinheiten, der konkreten Offenbarung der Ausführungsbeispiele folgend, nur unter Verwendung von mindestens 15 Ethylenoxideinheiten enthaltenden Emulgatoren herstellen lassen würden.

Gegenstand der vorliegenden Erfindung sind wasserdispergierbare Polyisocyanatgemische, gekennzeichnet durch
a) eine mittlere NCO-Funktionalität von 1,8 bis 4,2,
b) einen Gehalt an (cyclo)aliphatisch gebundenen Isocyanatgruppen (berechnet als NCO, Molekulargewicht = 42) von 12,0 bis 21,5 Gew.-% und
c) einen Gehalt an innerhalb von Polyetherketten angeordneten Ethylenoxideinheiten (berechnet als C₂H₄O, Molekulargewicht = 44) von 2 bis 20 Gew.-%, wobei die Polyetherketten im statistischen Mittel von 5,0 bis 9,9 Ethylenoxideinheiten aufweisen.

Gegenstand der Erfindung ist auch ein Verfahren zur Herstellung dieser Polyisocyanatgemische, welches dadurch gekennzeichnet ist, daß man
A) eine Polyisocyanatkomponente mit einer (mittleren) NCO-Funktionalität von 2,1 bis 4,4, bestehend aus mindestens einem Polyisocyanat mit ausschließlich (cyclo)aliphatisch gebundenen Isocyanatgruppen mit
B) einem einwertigen, im statistischen Mittel von 5,0 bis 9,9 Ethylenoxideinheiten aufweisenden Polyalkylenoxidpolyetheralkohol
unter Einhaltung eines NCO/OH-Äquivalentverhältnisses von 4:1 bis 120:1 umsetzt, wobei im übrigen Art und Mengenverhältnisse der genannten Ausgangskomponenten so gewählt werden, daß die resultierenden Umsetzungsprodukte den oben unter a) bis c) genannten Bedingungen entsprechen.

Gegenstand der Erfindung ist auch die Verwendung dieser Polyisocyanatgemische als Ausgangskomponente bei der Herstellung von Polyurethankunststoffen.

Gegenstand der Erfindung ist schließlich auch die Verwendung dieser Polyisocyanatgemische als Vernetzer für wasserlösliche oder -dispergierbare Lackbindemittel oder Lackbindemittelkomponenten bei der Herstellung von Überzügen unter Verwendung von wäßrigen Beschichtungsmitteln auf Basis derartiger Bindemittel oder Bindemittelkomponenten.

Die beim erfindungsgemäßen Verfahren einzusetzende Komponente A) weist eine (mittlere) NCO-Funktionalität von 2,1 bis 4,4, vorzugsweise 2,3 bis 4,2 auf. Sie besteht aus mindestens einem organischen Polyisocyanat mit ausschließlich (cyclo)aliphatisch gebundenen Isocyanatgruppen. Es handelt sich bei den Polyisocyanaten bzw. Polyisocyanatgemischen der Komponente A) um beliebige, durch Modifizierung einfacher (cyclo)aliphatischer Diisocyanate hergestellte Polyisocyanate mit Uretdion und/ oder Isocyanurat-, Urethan- undloder Allophanat-, Biuret- oder Oxadiazinstruktur, wie sie beispielsweise in den DE-OS'en 1 670 666, 3 700 209 und 3 900 053 oder den EP-A 336 205 oder EP-A 339 396 beispielhaft beschrieben sind.

Geeignete Diisocyanate zur Herstellung solcher Polyisocyanate sind grundsätzlich solche des Molekulargewichtsbereichs 140 bis 400 mit (cyclo)aliphatisch gebundenen Isocyanatgruppen, wie z.B. 1,4-Diisocyanatobutan, 1,6-Diisocyanatohexan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat) und 4,4'-Diisocyanatodicyclohexylmethan oder beliebige Gemische solcher Diisocyanate. Bevorzugt handelt es sich bei den Ausgangskomponenten A) um im wesentlichen aus trimerem 1,6-Diisocyanatohexan und gegebenenfalls dimerem 1,6-Diisocyanatohexan bestehende Isocyanuratgruppen und gegebenenfalls Uretdiongruppen aufweisende Polyisocyanatgemisch mit einem NCO-Gehalt von 19 bis 24 Gew.-%. Besonders bevorzugt werden als Komponente A) die entsprechenden, weitgehend Uretdiongruppen-freien, Isocyanuratgruppen aufweisenden Polyisocyanate des genannten NCO-Gehalts eingesetzt, wie sie durch an sich bekannte, katalytische Trimerisierung und unter Isocyanuratbildung von 1,6-Diisocyanatohexan erhalten werden und die vorzugsweise eine (mittlere) NCO-Funktionalität von 3,2 bis 4,2 aufweisen.

Bei der Komponente B) handelt es sich um einwertige, im statistischen Mittel 5,0 bis 9,9, vorzugsweise 6,0 bis 8,0 Ethylenoxydeinheiten pro Molekül aufweisende Polyalkylenoxidpolyetheralkohole, wie sie in an sich bekannter Weise durch Alkoxylierung geeigneter Startermoleküle zugänglich sind. Zur Herstellung der beim erfindungsgemäßen Verfahren eingesetzten Polyetheralkohole B) können beliebige einwertige Alkohole des Molekulargewichtsbereichs 32 bis 150, wie sie beispielsweise auch gemäß EP-A-206 059 Verwendung finden, als Startermoleküle eingesetzt werden. Besonders bevorzugt wird Methanol als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen B) handelt es sich entweder um reine Polyethylenoxidpolyether oder um gemischte Polyalkylenoxidpolyether, deren Alkylenoxideinheiten zu mindestens 70 Mol-%, vorzugsweise zu mindestens 80 Mol-% aus Ethylenoxideinheiten bestehen.

Bevorzugte Ausgangskomponente B) für das erfindungsgemäße Verfahren sind reine Polyethylenglycolmonomethyletheralkohole, die im statistischen Mittel 5,0 bis 9,9, besonders bevorzugt 6,0 bis 8,0 Ethylenoxideinheiten aufweisen.

Zur Durchführung des erfindungsgemäßen Verfahrens werden die Ausgangsverbindungen bei Temperaturen von 20 bis 120°C, vorzugsweise 40 bis 100°C, unter Einhaltung eines NCO-/OH-Äquivalent-Verhältnisses von 4:1 bis 120:1, vorzugsweise 6:1 bis 100:1, vorzugsweise bis zum Erreichen des theoretisch errechneten NCO-Gehaltes miteinander umgesetzt. Im übrigen werden Art und Mengenverhältnisse der Ausgangskomponenten im Rahmen der gemachten Angaben so gewählt, daß die resultierenden Polyisocyanatgemische
a) eine mittlere NCO-Funktionalität von 1,8 bis 4,2, vorzugsweise 2,0 bis 4,0,
b) einen NCO-Gehalt von 12,0 bis 21,5 Gew.-%, vorzugsweise von 15,0 bis 20,5 Gew.-% und
c) einen Gehalt an innerhalb von Polyetherketten angeordneten Ethylenoxideinheiten von 2 bis 20 Gew.-%, vorzugsweise 3 bis 17 Gew.-%

### aufweisen.

Die Umsetzung kann gegebenenfalls, wenn auch weniger bevorzugt in einem geeigneten, gegenüber Isocyanatgruppen inerten Lösemittel durchgeführt werden. Geeignete Lösemittel sind die an sich bekannten üblichen Lacklösemittel wie z.B. Ethylacetat, Butylacetat, Ethylenglykolmonomethyl- oder -ethyletheracetat, 1-Methoxypropyl-2acetat, 2-Butanon, 4-Methyl-2-pentanon, Cyclohexanon, Toluol, oder deren Gemische, aber auch Lösemittel wie Propylenglykoldiacetat, Diethylenglykoldimethylether, Diethylenglykolethyl- und -butyletheracetat, N-Methylpyrrolidon und N-Methylcaprolactam, oder Gemische solcher Lösemittel.

Die erfindungsgemäßen Verfahrensprodukte stellen klare, praktisch farblose Polyisocyanatgemische der bereits oben genannten Zusammensetzung dar. Sie neigen selbst bei längerer Lagerung und niedrigen Temperaturen nicht zur Kristallisation. Die Viskositäten liegen im allgemeinen nur unwesentlich höher als die der als Ausgangsverbindung A) eingesetzten Polyisocyanate.

Die erfindungsgemaßen Polyisocyanatgemische lassen sich leicht, ohne Einsatz hoher Scherkräfte, durch bloßes Einrühren in Wasser emulgieren. Dabei muß im Vergleich zu den bekannten hydrophil modifizierten Polyisocyanaten des Standes der Technik, bei gleichem Gesamtgehalt an Ethylenoxideinheiten, ein deutlich geringeres Viskositätsmaximum überwunden werden, weshalb bei der Herstellung von Emulsionen aus den erfindungsgemäßen Verfahrensprodukten auf die Verwendung von Hochgeschwindigkeitsrührern oder emulgierend wirkender Co-Solventien verzichtet werden kann.

Die erfindungsgemäßen Polyisocyanatgemische gestatten die Herstellung stabiler Emulsionen, in denen eine Reaktion der Isocyanatgruppen mit Wasser nur langsam abläuft. Es kann gezeigt werden, daß der NCO-Gehalt während der ersten 5 h nach erfolgter Emulgierung nur um weniger als 10 Rel.-% abnimmt (Beispiel 1). Die Emulsionen weisen selbst nach einer Standzeit von mehr als 24 h keinerlei Ausfällungen oder Bodensatz auf.

Gegebenenfalls können den nach dem erfindungsgemäßen Verfahren hergestellten Polyisocyanatgemischen vor der Emulgierung noch weitere (cyclo)aliphatische, nichthydrophilierte Polyisocyanate, insbesondere Lackpolyisocyanate der obengenannten Art, zugesetzt werden, wobei die Mengenverhältnisse so gewählt werden, daß die resultierenden Polyisocyanatgemische den vorstehend unter a) bis c) genannten Bedingungen entsprechen, und somit ebenfalls erfindungsgemäße Polyisocyanatgemische darstellen, da diese im allgemeinen aus Gemischen aus
(i) erfindungsgemäß hydrophil modifizierten Polyisocyanaten und
(ii) unmodifizierten Polyisocyanaten der beispielhaft genannten Art bestehen.

In solchen Mischungen übernehmen die erfindungsgemäßen Verfahrensprodukte die Funktion eines Emulgators für den nachträglich zugemischten Anteil an nichthydrophilen Polyisocyanaten.

Die erfindungsgemäßen Polyisocyanatgemische stellen wertvolle Ausgangsmaterialien zur Herstellung von Polyurethan-Kunststoffen nach dem Isocyanat-Polyadditionsverfahren dar.

Hierzu werden vorzugsweise wäßrige Emulsionen der Polyisocyanatgemische eingesetzt, die in Kombination mit in Wasser dispergierten Polyhydroxylverbindungen im Sinne von wäßrigen Zweikomponenten-Systemen zur Umsetzung gebracht werden können.

Besonders bevorzugt werden die erfindungsgemäßen Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wäßrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser dispergierte Polyurethane, die aufgrund der in den Urethangruppen vorliegenden aktiven Wasserstoffatome mit Polyisocyanaten vernetzbar sind; in Wasser gelöste oder dispergierte, Hydroxylgruppen aufweisende Polyacrylate, insbesondere solche des Molekulargewichtsbereichs Mn 1 000 bis 10 000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell geeignet sind alle in Wasser gelösten oder dispergierten Bindemittel, die NCO-reaktive Gruppen aufweisen. Bei dieser erfindungsgemäßen Verwendung werden die erfindungsgemäßen Polyisocyanat gemische im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen von 0,5:1 bis 2:1 entsprechen.

Gegebenenfalls können die erfindungsgemäßen Polyisocyanatgemische in untergeordneten Mengen auch nichtfunktionellen wäßrigen Lackbindemitteln zur Erzielung ganz spezieller Eigenschaften, beispielsweise als Additiv zur Haftverbesserung zugemischt werden.

Als Untergründe für die mit Hilfe der erfindungsgemäßen Polyisocyanatgemische formulierten wäßrigen Beschichtungen kommen beliebige Substrate in Betracht, wie z.B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im allgemeinen besitzen die mit den erfindungsgemäßen Polyisocyanatgemischen formulierten wäßrigen Beschichtungsmittel, denen gegebenenfalls die auf dem Lacksektor üblichen Hilfs- und Zusatzmittel, wie z.B. Verlaufshilfsmittel, Farbpigmente, Füllstoffe oder Mattierungsmittel, einverleibt werden können, schon bei Raumtemperaturtrocknung gute lacktechnische Eigenschaften. Selbstverständlich lassen sie sich jedoch auch unter forcierten Bedingungen bei erhöhter Temperatur bzw. durch Einbrennen bei Temperaturen bis 260°C trocknen.

Aufgrund ihrer hervorragenden Wasseremulgierbarkeit, die eine homogene, besonders feinteilige Verteilung in wäßrigen Lackbindemitteln ermöglicht, zeigen sich die erfindungsgemaßen Polyisocyanatgemische den wasseremulgierbaren Polyisocyanaten des Standes der Technik hinsichtlich ihrer Eignung als Vernetzerkomponente für wäßrige Polyurethanreaktivsysteme deutlich überlegen und ergeben dabei Lackfilme mit insbesondere stark verbesserten optischen Eigenschaften, d,h, besserem Oberflächenglanz, Verlauf und höherer Transparenz.

Die folgenden Beispiele dienen zur weiteren Erläuterung der Erfindung. Alle Prozentangaben beziehen sich, soweit nichts anderslautendes vermerkt, auf Gewichtsprozente.

### Beispiele

### Beispiel 1

1,0 Val eines Isocyanuratgruppen-haltigen Polyisocyanates auf Basis von 1,6-Diisocyanatohexan (HDI) mit einem NCO-Gehalt von 21,5 %, einer mittleren NCO-Funktionalität von ca. 3,8 und einer Viskosität von 3 000 mPas (23°C) werden bei Raumtemperatur unter Rühren mit 0,08 Val eines auf Methanol gestarteten, monofunktionellen Polyethylenoxidpolyethers mit einem mittleren Molekulargewicht von 350 versetzt und anschließend für 3 h auf 100°C erwärmt. Nach Abkühlen auf Raumtemperatur liegt ein erfindungsgemäßes, praktisch farbloses klares Polyisocyanatgemisch vor. Der NCO-Gehalt beträgt 17,3 %, der Gehalt an Ethylenoxideinheiten beträgt 11,3 % und die Viskosität 3 050 mPas (23°C).

75 g dieses Polyisocyanatgemisches werden in einem Erlenmeyerkolben mit 175 g entionisiertem Wasser versetzt und durch leichtes Rühren in eine feinteilige, blaustichige Emulsion überführt.

Wie die nachfolgende Tabelle zeigt, nimmt der NCO-Gehalt in der Emulsion während der ersten 5 h bei 23°C um weniger als 10 Rel.-% ab.

| Standzeit der Emulsion [min] bei 23°C | NCO-Gehalt Ä%Ü |
|---|---|
| 5 | 5,2 |
| 60 | 5,0 |
| 120 | 4,9 |
| 180 | 4,9 |
| 240 | 4,7 |
| 300 | 4,7 |

Nach einer Standzeit von 24 h (23°C) ist die Emulsion noch stabil. Sie zeigt keinerlei Ausfällungen oder Bodensatz.

### Beispiel 2

2,5 Val eines Uretdion- und Isocyanuratgruppen-haltigen Polyisocyanatgemisches auf Basis von HDI mit einem NCO-Gehalt von 21,9 %, einer mittleren NCO-Funktionalität von ca. 2,4 und einer Viskosität von 150 mPas (23°C) werden bei Raumtemperatur mit 0,13 Val des in Beispiel 1 beschriebenen Polyethers vermischt. Man rührt die Mischung 2,5 h bei 100°C und erhält nach Abkühlen ein erfindungsgemäßes klares, farbloses Polyisocyanatgemisch mit einem NCO-Gehalt von 18,9 %, einem Gehalt an Ethylenoxideinheiten von 7,9 % und einer Viskosität von 320 mPas (23°C).

### Beispiel 3

1,0 Val eines Isocyanuratgruppen-haltigen Polyisocyanates auf Basis von HDI mit einem NCO-Gehalt von 22,5 % einer mittleren NCO-Funktionalität von ca. 3,3 und einer Viskosität von 800 mPas (23°C) werden bei Raumtemperatur mit 0,03 Val des in Beispiel 1 beschriebenen Polyethers vermischt. Man rührt die Mischung 2 h bei 100°C und erhält nach Abkühlen ein erfindungsgemäßes, klares, praktisch farbloses Polyisocyanatgemisch mit einem NCO-Gehalt von 20,7 %, einem Gehalt an Ethylenoxideinheiten von 4,8 % und einer Viskosität von 1 100 mPas (23°C).

### Beispiel 4 (Vergleichsbeispiel)

1,0 Val des in Beispiel 1 beschriebenen Isocyanuratgruppen-haltigen Polyisocyanates werden bei Raumtemperatur mit 0,035 Val eines auf Methanol gestarteten, monofunktionellen Polyethylenoxidpolyethers mit einem mittleren Molekulargewicht von 750 versetzt und anschließend auf 100°C erwärmt, bis nach 4 h ein NCO-Gehalt von 18,3 % erreicht ist. Beim Abkühlen auf Raumtemperatur kristallisiert das Produkt, welches einen Gehalt an Ethylenoxideinheiten von 11,3 % aufweist, teilweise aus und ist somit für Lackanwendungen unbrauchbar.

### Beispiel 5 (Vergleichsbeispiel)

1,0 Val des in Beispiel 1 eingesetzten Isocyanuratgruppen-haltigen Polyisocyanates werden bei Raumtemperatur mit 0,015 Val eines auf n-Butanol gestarteten, monofunktionellen Polyethylenoxid-polypropylenoxidpolyethers mit einem Gehalt an Ethylenoxideinheiten von 80 % und einem mittleren Molekulargewicht von 2 150 versetzt und anschließend für 1 h auf 100°C erwärmt. Nach Abkühlen auf Raumtemperatur erhält man ein schwach gelbes, klares Polyisocyanatgemisch mit einem NCO-Gehalt von 18,2 %, einem Gehalt an Ethylenoxideinheiten von 11,3 % und einer Viskosität von 3 360 mPas (23°C).

### Beispiel 6 (Verwendung)

100 Gew.-Teile einer wäßrigen, hydroxyfunktionellen Polyacrylatdispersion mit einem Festkörpergehalt von 30 % und einem OH-Gehalt von 4,0 %, bezogen auf Festharz, im wesentlichen bestehend aus 8,3 % Acrylsäure, 18,1 % Methylmethacrylat, 41,7 % n-Butylacrylat und 31,9 % Hydroxy-C₃-alkylacrylat (Anlagerungsprodukt von Propylenoxid an Acrylsäure) werden mit 0,6 Gewichtsteilen einer 25 %igen wäßrigen Lösung eines handelsüblichen Emulgators (Emulgator WN, Bayer AG, Leverkusen), 2,25 Gew.-Teilen einer 20 %igen wäßrigen Lösung eines handelsüblichen, nichtionischen Polyurethan-Verdickers (®Acrysol RM8, Rohm und Haas, Frankfurt) und 0,7 Gew.-Teilen eines handelsüblichen Entschäumers (®Bevaloid 581B, Erbslöh, Düsseldorf) gemischt. Die Zubereitung ist unbegrenzt lagerstabil.

Dem obengenannten Ansatz setzt man eine Isocyanatfunktionelle Vernetzer-Komponente zu und homogenisiert durch intensives Rühren.

Bei Verwendung des erfindungsgemäßen Polyisocyanatgemisches aus Beispiel 1 als Vernetzerkomponente (25,8 Gew.-Teile, entsprechend einem Äquivalentverhältnis von Isocyanatgruppen zu alkoholischen Hydroxylgruppen von 1,5:1) wird schnelle Homogenisierung durch einfaches Einrühren erreicht. Die Verarbeitungszeit des verarbeitungsfertigen, also gemischten Ansatzes beträgt 2 bis 3 Stunden. Der in einer Naßfilm-Schichtdicke von 200 µm (= ca. 50 µm trocken) aufgetragene Film erscheint direkt nach dem Auftrag als Naßfilm fast transparent. Er hat einen leichten gelblichen Schimmer (Tyndall-Effekt). Die Zeit bis zur Staubtrocknung beträgt ca. 2 bis 3 Stunden und bis zur Drucktrocknung ca. 3 bis 4 Stunden. Es bildet sich ein glänzender, völlig klarer und transparenter Lackfilm.

Der ausgehärtete, zähelastische Lackfilm hat eine Pendelhärte von 80 Sekunden (Albert/König), zeigt gute Beständigkeit gegen Einwirkung von Testbenzin, Solventnaphtha und Methoxypropylacetat sowie mittlere Beständigkeit bei Einwirkung von Aceton und Ethanol.

Bei Verwendung eines erfindungsgemäßen Polyisocyanatgemisches, welches durch Vermischen von 14,1 Gew.-Teilen des Polyisocyanatgemisches aus Beispiel 1 und 9,4 Gew.-Teilen des in Beispiel 2 als Ausgangsmaterial eingesetzten, Uretdion- und Isocyanuratgruppen-haltigen Polyisocyanatgemisches hergestellt worden ist, entsprechend einem Äquivalentverhältnis von Isocyanatgruppen zu alkoholischen Hydroxylgruppen von 1,5:1) wird durch einfaches Rühren ebenfalls schnelle Homogenisierung erreicht.

Der gemischte, verarbeitungsfertige Ansatz hat eine Verarbeitungszeit von 3 bis 4 Stunden. Der in einer Naßfilm-Schichtdicke von 200 µm (= ca. 50 µm trocken) applizierte Film erscheint nach dem Auftrag als Naßfilm trübe. Die Zeit bis zur Staubtrocknung beträgt 1 Stunde und bis zur Drucktrocknung 3 bis 4 Stunden. Es bildet sich ein glänzender, völlig klarer und transparenter Lackfilm mit folgenden Eigenschaften:

| | |
|---|---|
| Optik (Glanz/Transparenz) | sehr gut |
| Pendelhärte (Albert/König) | 90 sec |
| Lösemittelbeständigkeit | |
| Testbenzin | sehr gut |
| Solventnaphtha 100 | sehr gut |
| Methoxypropylacetat | sehr gut |
| Aceton | gut |
| Ethanol | gut |

Bei Verwendung des Vergleichs-Polyisocyanatgemisches aus Beispiel 5 (24,5 Gew,-Teile, entsprechend einem Äquivalentverhältnis von Isocyanatgruppen zu alkoholischen Hydroxylgruppen von 1,5:1) gelingt eine Homogenisierung des Lackansatzes durch einfaches Rühren nur schwer. Die in einer Naßfilm-Schichtdicke von 200 µm (= ca, 50 µm trocken) aufgetragenen Filme erscheinen direkt nach dem Auftrag milchig weiß. Nach der Trocknung bzw. Aushärtung bleiben sie trübe und haben matte Oberflächen,

### Beispiel 7 (Verwendung)

100 Gew.-Teile einer wäßrigen, hydroxyfunktionellen Polyacrylatdispersion mit einem Festkörpergehalt von 48,2 % und einem OH-Gehalt von 2,0 %, bezogen auf Festharz, im wesentlichen bestehend aus einem Copolymerisat aus 17,1 % 4-Hydroxybutylacrylat, 40,0 % n-Butylacrylat, 41,5 % Methylmethacrylat und 1,4 % Acrylsäure, werden mit 4,82 Gewichtsteilen einer 1,0 %igen wäßrigen Lösung eines handelsüblichen Verdickungsmittels (®Acrysol RM8, Rohm und Haas, Frankfurt), 0,96 Gew.-Teilen einer wäßrigen, 25 %igen Lösung eines handelsüblichen Emulgators (Emulgator WN, Bayer AG, Leverkusen) und 0,57 Gew.-Teilen eines handelsüblichen Entschäumers (®Bevaloid 581B, Fa. Erbslöh, Düsseldorf) gemischt. Diese Zubereitung ist lagerstabil. Dem obengenannten Ansatz wird eine Vernetzer-Komponente zugesetzt und durch intensives Rühren homogenisiert.

Bei Verwendung des erfindungsgemäßen Polyisocyanatgemisches aus Beispiel 1 (13,8 bzw. 27,6 Gew.-Teile; entsprechend einem NCO/OH-Äquivalentverhältnis von 1:1 bzw. 2:1) wird schnelle Homogenisierung durch einfaches Einrühren erreicht. Die Verarbeitungszeit des verarbeitungsfertigen, also gemischten Lackansatzes beträgt 5 bis 8 Stunden. Der in einer Naßfilm-Schichtdicke von 200 µm (= ca. 50 µm trocken) aufgetragene Film erscheint direkt nach dem Auftrag in nassem Zustand fast transparent. Er hat einen leichten gelblichen Schimmer (Tyndall-Effekt). Die Zeit bis zur Staubtrocknung beträgt 1 bis 2 Stunden und bis zur Drucktrocknung ca. 2 bis 3 Stunden. Dabei bilden sich glänzende, völlig klare und transparente Lackfilme. Die ausgehärteten zähharten Lackfilme können wie folgt charakterisiert werden.

| | | |
|---|---|---|
| | NCO/OH = 1,0 | NCO/OH = 2,0 |
| Filmoptik | sehr gut | sehr gut |
| Pendelhärte | 70 sec | 85 sec |
| Lösemittelbeständigkeit | | |
| Testbenzin | sehr gut | sehr gut |
| Solventnaphtha | gut | sehr gut |
| Methoxypropylacetat | gut - mäßig | gut |
| Aceton | mäßig | mäßig |
| Ethanol | gut - mäßig | gut - mäßig |

Beim Einsatz des Vergleichs-Polyisocyanatgemisches aus Beispiel 5 als Vernetzerkomponente (13,1 bzw. 26,2 Gew.-Teile) entsprechend einem NCO/OH-Äquivalentverhältnis von 1:1 bis 2:1 ist eine Homogenisierung des Lackansatzes schwierig. Die in einer Naßfilmschichtdicke von 200 µm (= ca. 50 µm trocken) applizierten Filme erscheinen direkt nach dem Auftrag milchig weiß. Nach der Trocknung bzw. Aushärtung bleiben sie trübe und haben matte Oberflächen.

## Patentansprüche

1. Wasserdispergierbare Polyisocyanatgemische gekennzeichnet durch
a) eine mittlere NCO-Funktionalität von 1,8 bis 4,2,
b) einen Gehalt an (cyclo)aliphatisch gebundenen Isocyanatgruppen (berechnet als NCO, Molekulargewicht = 42) von 12,0 bis 21,5 Gew.-% und
c) einen Gehalt an innerhalb von Polyetherketten angeordneten Ethylenoxideinheiten (berechnet als C₂H₄O, Molekulargewicht = 44) von 2 bis 20 Gew.-%, wobei die Polyetherketten im statistischen Mittel von 5,0 bis 9,9 Ethylenoxideinheiten aufweisen.

2. Verfahren zur Herstellung von Polyisocyanatgemischen gemäß Anspruch 1, dadurch gekennzeichnet, daß man
A) eine Polyisocyanatkomponente mit einer (mittleren) NCO-Funktionalität von 2,1 bis 4,4, bestehend aus mindestens einem Polyisocyanat mit ausschließlich (cyclo)aliphatisch gebundenen Isocyanatgruppen mit
B) einem einwertigen, im statistischen Mittel von 5,0 bis 9,9 Ethylenoxideinheiten aufweisenden Polyalkylenoxidpolyetheralkohol
unter Einhaltung eines NCO/OH-Äquivalentverhältnisses von 4:1 bis 120:1 umsetzt, wobei im übrigen Art und Mengenverhältnisse der genannten Ausgangskomponenten so gewählt werden, daß die resultierenden Umsetzungsprodukte den in Anspruch 1 unter a) bis c) genannten Bedingungen entsprechen.

3. Verfahren gemäß Anspruch 2, dadurch gekennzeichnet, daß man als Komponente A) ein im wesentlichen aus trimerem und gegebenenfalls dimerem 1,6-Diisocyanatohexan bestehendes Isocyanuratgruppen und gegebenenfalls Uretdiongruppen aufweisendes Polyisocyanatgemisch mit einem NCO-Gehalt von 19 bis 24 Gew.-% verwendet.

4. Verfahren gemäß Anspruch 2 und 3, dadurch gekennzeichnet, daß man als Komponente B) einen im statistischen Mittel von 6,0 bis 8,0 Ethylenoxideinheiten aufweisenden Polyethylenglykolmonomethylether verwendet.

5. Verwendung der Polyisocyanatgemische gemäß Anspruch 1 als Ausgangskomponente bei der Herstellung von Polyurethankunststoffen.

6. Verwendung der Polyisocyanatgemische gemäß Anspruch 1 als Vernetzerkomponente für wasserlösliche oder -dispergierbare Lackbindemittel oder Lackbindemittelkomponenten bei der Herstellung von Überzügen unter Verwendung von wäßrigen Beschichtungsmitteln auf Basis derartiger Bindemittel oder Bindemittelkomponenten.

## Claims

1. Water-dispersible polyisocyanate mixtures characterised by
a) an average NCO functionality of 1.8 to 4.2,
b) a content of (cyclo)aliphatically bound isocyanate groups (calculated as NCO, molecular weight = 42) of 12.0 to 21.5 wt.% and
c) a content of ethylene oxide units (calculated as C₂H₄O, molecular weight = 44) arranged within polyether chains of 2 to 20 wt.%, wherein the polyether chains have, on statistical average, from 5.0 to 9.9 ethylene oxide units.

2. Process for the production of polyisocyanate mixtures according to claim 1, characterised in that
A) a polyisocyanate component with an (average) NCO functionality of 2.1 to 4.4 consisting of at least one polyisocyanate with exclusively (cyclo)aliphatically bound isocyanate groups is reacted with
B) a monovalent polyalkylene oxide polyether alcohol having, on statistical average, from 5.0 to 9.9 ethylene oxide units
while maintaining an NCO/OH equivalent ratio of 4:1 to 120:1, whereby the nature and quantity ratios of the stated starting compounds are moreover selected such that the resultant reaction products conform to the conditions stated under a) to c) in claim 1.

3. Process according to claim 2, characterised in that a polyisocyanate mixture substantially consisting of trimeric and optionally dimeric 1,6-diisocyanatohexane containing isocyanurate groups and optionally uretidione groups and having an NCO content of 19 to 24 wt.% is used as component A).

4. Process according to claims 2 and 3, characterised in that a polyethylene glycol monomethyl ether containing, on statistical average, from 6.0 to 8.0 ethylene oxide units is used as component B).

5. Use of the polyisocyanate mixtures according to claim 1 as a starting component in the production of polyurethane plastics.

6. Use of the polyisocyanate mixtures according to claim 1 as a crosslinking component for water-soluble or water-dispersible lacquer binders or lacquer binder components in the production of coatings using aqueous coating compositions based on such binders or binder components.

## Revendications

1. Mélanges de polyisocyanates dispersables dans l'eau, caractérisés par :
a) une fonctionnalité moyenne en groupes NCO de 1,8 à 4,2,
b) une teneur en groupes isocyanates à liaisons (cyclo)aliphatiques (exprimée en NCO, poids équivalent = 42) de 12,0 à 21,5 % en poids et
c) une teneur en motifs d'oxyde d'éthylène placés à l'intérieur des chaînes de polyéthers (exprimée en C₂H₄O, poids équivalent = 44) de 2 à 20 % en poids, les chaînes de polyéthers contenant en moyenne statistique de 5,0 à 9,9 motifs d'oxyde d'éthylène.

2. Procédé de préparation des mélanges de polyisocyanates selon la revendication 1, caractérisé en ce que l'on fait réagir :
A)un composant polyisocyanate ayant une fonctionnalité (moyenne) en groupes NCO de 2,1 à 4,4, qui consiste en au moins un polyisocyanate à groupes isocyanates à liaisons exclusivement (cyclo)aliphatiques, avec
B) un oxyde de polyalkylène-polyéther-alcool monovalent, contenant en moyenne statistique de 5,0 à 9,9 motifs d'oxyde d'éthylène,
en respectant un rapport de 4 : 1 à 120 : 1 entre les équivalents de groupes NCO et les équivalents de groupes OH, la nature et les proportions relatives des composants de départ mentionnés étant d'autre part choisies en sorte que les produits de réaction obtenus satisfassent aux conditions mentionnées dans la revendication 1 sous a) à c).

3. Procédé selon la revendication 2, caractérisé en ce que l'on utilise en tant que composant A) un mélange de polyisocyanates à groupes isocyanurates et le cas échéant à groupes uret-diones, consistant essentiellement en 1,6diisocyanatohexane trimère et le cas échéant dimère, à une teneur en NCO de 19 à 24 % en poids.

4. Procédé selon les revendications 2 et 3, caractérisé en ce que l'on utilise en tant que composant B) un éther monométhylique de polyéthylèneglycol contenant en moyenne statistique de 6,0 à 8,0 motifs d'oxyde d'éthylène.

5. Utilisation des mélanges de polyisocyanates selon la revendication 1 en tant que composants de départ de la préparation de résines synthétiques de polyuréthanes.

6. Utilisation des mélanges de polyisocyanates selon la revendication 1 en tant que composants réticulants pour des liants ou composants de liants pour vernis solubles dans l'eau ou dispersables dans l'eau à l'application de revêtements àl'aide de produits de revêtement aqueux à base de tels liants ou composants de liants.
